# EUROPEAN PATENT APPLICATION

(11) **EP 4 764 830 A1**
(43) Date of publication of application: **24.06.2026**
(21) Application number: 24221935.0
(22) Date of filing: 19.12.2024
(51) Int. Cl.: G06F 8/52, G06F 11/362, G06F 11/3668

(54) **CONTROLLING EMBEDDED BOARDS TO EXECUTE BINARIES**

(71) Applicant: emproof B.V., 5611 ZX Eindhoven (NL)
(72) Inventor: Blazytko, Tim, 5611 ZX EINDHOVEN (NL); Fyrbiak, Marc, 5611 ZX EINDHOVEN (NL); Kollenda, Benjamin, 5611 ZX EINDHOVEN (NL); Koppe, Philipp, 5611 ZX EINDHOVEN (NL); Mzannar, Rachid, 5611 ZX EINDHOVEN (NL); Schinkel, Armand-Julien, 5611 ZX EINDHOVEN (NL); Stolz, Florian, 5611 ZX EINDHOVEN (NL)
(74) Representative: De Vries & Metman

(57) **Abstract**

A system (27) for controlling embedded boards to execute binaries is configured to obtain custom logic for each respective board of a plurality of bare-metal embedded boards (31-32). The custom logic depends on a board type of the respective board. The system is further configured to obtain a binary for each respective board of the plurality of bare-metal embedded boards and control each respective board of the plurality of bare-metal embedded boards to execute the binary obtained for the respective board according to the custom logic obtained for the respective board.

## Description

### FIELD OF THE INVENTION

The invention relates to a system for controlling embedded boards to execute binaries, e.g., transformed binaries.

The invention further relates to a method of controlling embedded boards to execute binaries, e.g., transformed binaries.

The invention also relates to a computer program product enabling a computer system to perform such a method.

### BACKGROUND OF THE INVENTION

Binary rewriting is a technique that involves modifying compiled executable code directly at the binary level. Unlike source code modification, binary rewriting operates on machine code, which enables alterations to programs even without access to their original source code. This process allows developers to modify, optimize, and add functionalities to existing binaries, enhancing performance or security without recompiling. Binary rewriting can be static, where the binary is modified in storage, or dynamic, where modifications occur at runtime as instructions are executed.

An advantage of static binary rewriting is that since modifications happen before runtime, the rewritten binary often runs faster compared to dynamic approaches. No runtime monitoring or instrumentation is needed, which reduces overhead. Furthermore, since it does not require dynamic components, static rewriting is often preferred for resource-constrained environments where runtime overhead must be minimized.

One key application of binary rewriting is in performance optimization. For instance, by rearranging instructions or removing redundancies, developers can achieve a more efficient binary that runs faster or uses less memory. Another common use is in security, where binary rewriting is used to add protective measures like control flow integrity, memory bounds checking, or sandboxing to an application after it has been compiled. These approaches enable developers to add safeguards or improve program efficiency without modifying the original development process.

Assessing the effectiveness and correctness of a binary transformation technique is crucial because it ensures that the transformed binary not only performs as intended but also preserves the original functionality and behavior of the application. Effectiveness measures the extent to which the transformation achieves its goals, such as improved performance or enhanced security, while correctness verifies that these changes do not introduce errors, vulnerabilities, or undesired behavior. Since binary transformations directly modify executable code, even minor inaccuracies can lead to unexpected failures, security risks, or degraded performance, making thorough evaluation essential. This assessment protects the integrity of the application and maintains user trust by ensuring that the transformed binary remains reliable and functional under all intended conditions.

US 11,461,472 discloses a system and method for assessing the effectiveness and correctness of a binary transformation technique used to transform program binaries to make them more secure against cyberattacks. The system takes source code, compiler information, and flags as input. It applies a binary transformation technique to the compiler to create a transformed compiler. It then compiles the source code using both the raw and transformed compiler and compares the results.

US 11,461,472 further discloses a test infrastructure for running the compilers, which may include virtual machines running specific operating systems (e.g., Ubuntu on a Windows host) and physical host computers selected based on the processor architecture requirements of the compilers being tested (e.g. x86 PCs, ARM-based Raspberry Pis, PowerPC development boards). The test infrastructure is controlled by the ACME manager and can load the appropriate operating system, compiler, and test environment as needed.

A drawback of the system and method of US 11,461,472 is that the tests are limited to virtual machines and physical host computers running operating systems and cannot be executed on bare-metal embedded development boards.

### SUMMARY OF THE INVENTION

It is advantageous to provide a system and method, which can be used to test binaries on bare-metal embedded boards.

In a first aspect, a system for controlling embedded boards to execute binaries comprises at least one control interface and at least one processor configured to obtain custom logic for each respective board of a plurality of bare-metal embedded boards, the custom logic depending on a board type of the respective board, obtain a binary for each respective board of the plurality of bare-metal embedded boards, and control, via the at least one control interface, each respective board of the plurality of bare-metal embedded boards to execute the binary obtained for the respective board according to the custom logic obtained for the respective board.

While controlling virtualized environments, e.g., virtual machines or Docker containers, and native computers (physical host computers) to execute a binary via operating system primitives is straightforward, controlling a bare-metal embedded board to execute a binary is less so. When tests only need to be run on one type of bare-metal embedded board, the testing system can be customized for this board type. However, by obtaining custom logic for each bare-metal embedded board, e.g., from in a database, which depends on the board type, and controlling each board according to the custom logic obtained for this board, a test infrastructure may be realized that can execute binaries on different types of bare-metal embedded boards, and can preferably also execute binaries on virtualized environments and native computers.

A binary refers to a compiled or machine-readable file containing executable code that a computer can run directly. This code is typically generated by compiling source code written in a high-level programming language (like C, C++, or Rust) into a format that a specific processor architecture (like x86 or ARM) understands. In computing, binaries often include applications, system programs, or low-level software (such as drivers or firmware) and consist of binary code-machine instructions and data encoded in binary (0s and 1s) form. They can run on operating systems (like Windows or Linux) or directly on hardware (in the case of embedded systems or firmware).

The binaries to be executed by the plurality of bare-metal embedded boards may have been created by applying one or more transformations and the at least one processor may be configured to collect, from each respective board, output generated by the binary during execution on the respective board and determine whether the one or more transformations are correct based on the collected output.

The at least one processor may be configured to compare the collected output with expected output and determine that the one or more transformations are correct if the collected output matches the expected output.

The at least one processor may be configured to create the binaries to be executed by the plurality of bare-metal embedded boards by applying the one or more transformations to each of multiple input binaries.

The at least one processor may be configured to simultaneously control each respective board of the plurality of bare-metal embedded boards to execute the binary obtained for the respective board according to the custom logic obtained for the respective board.

The custom logic obtained for an embedded board of the plurality of bare-metal embedded boards may indicate a pin responsible for power cycling on the embedded board and the at least one processor may be configured to control the embedded board according to the custom logic by clearing any residual states from the embedded board via the pin responsible for power cycling before the embedded board executes the binary.

The system may further comprise a power management board, the power management board comprising multiple programmable diodes capable of automatically switching components of the embedded board on or off, thereby effectively connecting or disconnecting power, and the at least one processor may be configured to cause the power management board to clear any residual states from the embedded board via the pin responsible for power cycling.

An embedded board of the plurality of bare-metal embedded boards may comprise a debugger, the custom logic obtained for the embedded board may indicate an address and a port to which the debugger of the embedded board listens, and the at least one processor may be configured to control the embedded board according to the custom logic by instructing the debugger via the address and the port to execute the binary.

The at least one processor may be configured to instruct the debugger to flash the binary onto the embedded board before executing the binary and/or grab output generated by the binary during execution of the binary.

The binaries to be executed by the plurality of bare-metal embedded boards may be transformed binaries, e.g., hardened binaries.

The at least one processor may be configured to select the plurality of bare-metal embedded boards from a collection of bare-metal embedded boards, the collection of bare-metal embedded boards comprising bare-metal embedded boards having the same board type and the plurality of bare-metal embedded boards not comprising bare-metal embedded boards having the same board type.

The at least one processor may be configured to obtain a binary for each virtualized environment and each native computer of a plurality of virtualized environments and native computers and control each respective virtualized environment and each respective native computer of the plurality of virtualized environments and native computers to execute the binary obtained for the respective virtualized environment or the respective native computer.

The system may further comprise the plurality of bare-metal embedded boards.

In a second aspect, a method of controlling embedded boards to execute binaries comprises obtaining custom logic for each respective board of a plurality of bare-metal embedded boards, the custom logic depending on a board type of the respective board, obtaining a binary for each respective board of the plurality of embedded boards, and controlling each respective board of the plurality of bare-metal embedded boards to execute the binary obtained for the respective board according to the custom logic obtained for the respective board. The method may be performed by software running on a programmable device. This software may be provided as a computer program product.

Moreover, a computer program for carrying out the methods described herein, as well as a non-transitory computer readable storage-medium storing the computer program are provided. A computer program may, for example, be downloaded by or uploaded to an existing device or be stored upon manufacturing of these systems.

In another aspect, a non-transitory computer-readable storage medium stores a software code portion, the software code portion, when executed or processed by a computer, being configured to perform the method described above.

As will be appreciated by one skilled in the art, aspects of the present invention may take the form of a device, a method or a computer program product. Accordingly, aspects of the present invention may take the form of an entirely hardware implementation, an entirely software implementation (including firmware, resident software, micro-code, etc.) or an implementation combining software and hardware aspects that may all generally be referred to herein as a "circuit", "module" or "system." Functions described in this disclosure may be implemented as an algorithm executed by a processor/microprocessor of a computer. Furthermore, aspects of the present invention may take the form of a computer program product in one or more computer readable medium(s) having computer readable program code stored thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code included therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Swift, Dart, Python, Go, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to implementations of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of devices, methods and computer program products according to various implementations of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

### BRIEF DESCRIPTION OF THE DRAWINGS

These and other aspects of the invention are apparent from and will be further elucidated, by way of example, with reference to the drawings, in which:
Fig. 1 is a flow chart of a first implementation of the method;
Fig. 2 is a flow chart of a second implementation of the method;
Fig. 3 shows an implementation of an end-to-end validation framework;
Fig. 4 is a block diagram of an implementation of the system; and
Fig. 5 is a block diagram of an exemplary data processing system for performing the methods of the invention.

Corresponding elements in the drawings are denoted by the same reference numeral.

### DETAILED DESCRIPTION

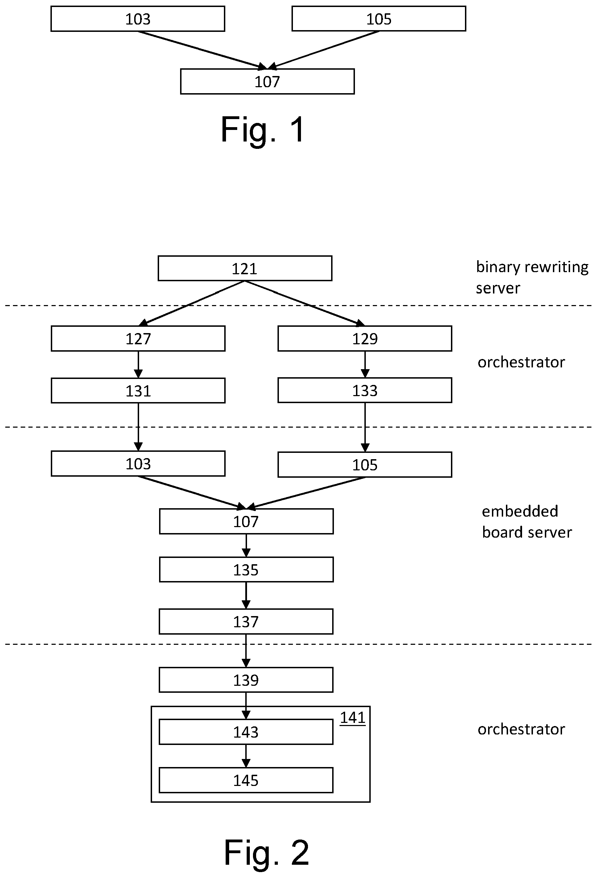

A first implementation of the method of controlling embedded boards to execute binaries is shown in Fig. 1. A step 103 comprises obtaining custom logic for each respective board of a plurality of bare-metal embedded boards. The custom logic depends on a board type of the respective board.

A step 105 comprises obtaining a binary for each respective board of the plurality of bare-metal embedded boards. The binary may also depend on the board type of the respective board. The binaries to be executed by the plurality of bare-metal embedded boards may be transformed binaries (e.g., hardened binaries), for example.

A step 107 comprises controlling, e.g., simultaneously controlling, each respective board of the plurality of bare-metal embedded boards to execute the binary obtained for the respective board in step 105 according to the custom logic obtained for the respective board in step 107.

A second implementation of the method of controlling embedded boards to execute binaries is shown in Fig. 2. The implementation of Fig. 2 is an extension of the implementation of Fig. 1. A step 121 comprises a binary rewriting server creating transformed binaries to be executed by a plurality of bare-metal embedded boards by applying one or more transformations to at least one input binary, e.g., to each of multiple input binaries.

A step 127 comprises the orchestrator obtaining information for each respective board of the plurality of bare-metal embedded boards based on the respective board type of the respective board. A step 129 comprises the orchestrator obtaining the transformed binary for each respective board of the plurality of bare-metal embedded boards, as created in step 121. The transformed binary may depend on a board type of the respective board.

A step 131 comprises the orchestrator providing, for each respective board, the information obtained for the respective board in step 127 to an embedded board server or to a separate binary runner server. A step 133 comprises the orchestrator providing, for each respective board, the transformed binary obtained for the respective board in step 129 to the embedded board server or to the separate binary runner server.

If the information and the transformed binary for each embedded board is provided to a separate binary runner server, the binary runner server will then provide the information and the transformed binary for each embedded board to the embedded board server. Optionally, the binary runner server or the embedded board server may select the plurality of bare-metal embedded boards from a collection of bare-metal embedded boards. The collection of bare-metal embedded boards comprises bare-metal embedded boards having the same board type. The plurality of bare-metal embedded boards does not comprise bare-metal embedded boards having the same board type.

Step 103 comprises the embedded board server receiving the information provided by the orchestrator in step 131. Step 103 also comprises the embedded board server obtaining custom logic for each respective board of the plurality of bare-metal embedded boards. The custom logic depends on a board type of the respective board. The custom logic may be part of the information received from the orchestrator or the binary runner server and/or may be stored or computed on the embedded board server, for example. In the latter case, the embedded board server may obtain custom logic based on a board type specified in the information received from the orchestrator or the binary runner server. Step 105 comprises the embedded board server obtaining, from the orchestrator or binary runner server, the transformed binary for each respective board of the plurality of bare-metal embedded boards.

Step 107 comprises the embedded board server controlling, e.g., simultaneously controlling, each respective board of the plurality of bare-metal embedded boards to execute the transformed binary obtained for the respective board in step 105 according to the custom logic obtained for the respective board in step 107.

A step 135 comprises the embedded board server collecting, from each respective board, output generated by the transformed binary during execution on the respective board. A step 137 comprises the embedded server providing the collected output to the orchestrator, optionally via the binary runner server.

A step 139 comprises the orchestrator receiving the output provided by the embedded server, optionally via the binary runner server. A step 141 comprises the orchestrator determining whether the one or more transformations are correct based on the collected output received in step 139. Step 141 may optionally comprise steps 143 and 145. Step 143 comprises comparing the collected output with expected output. Step 145 comprises determining that the one or more transformations are correct if the collected output matches the expected output.

Optionally, step 127 may further comprise the binary runner server obtaining a transformed binary for each virtualized environment, e.g., each virtual machine or Docker container, and each native computer of a plurality of virtualized environments and native computers and a further step not shown in Fig. 2 may comprise one or more further runners controlling each respective virtualized environment and each respective native computer of the plurality of virtualized environments and native computers to execute the transformed binary obtained for the respective virtualized environment or the respective native computer.

In this case, step 139 may further comprise the orchestrator receiving output collected by the one or more further runners from the plurality of virtualized environments and native computers, and step 141 may comprise the orchestrator determining whether the one or more transformations are correct based on the output collected from the plurality of boards and from the plurality of virtualized environments and native computers.

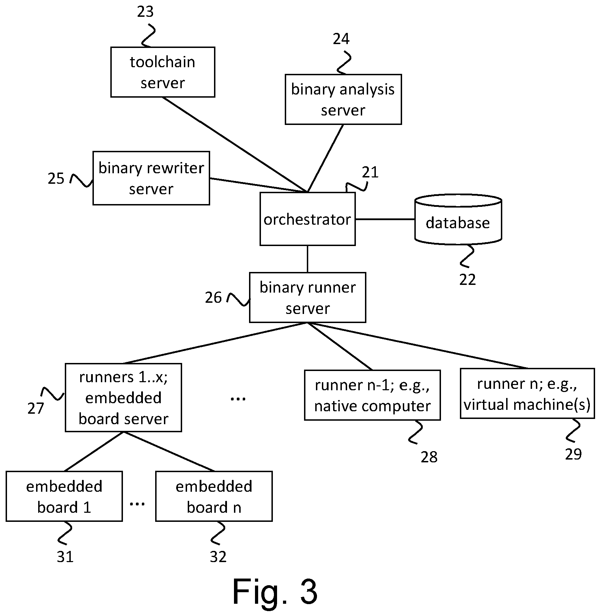

Fig. 3 shows an implementation of an end-to-end validation framework. This framework is aimed at validating binary transformation processes on a large scale and is specifically aimed at binary rewriting for embedded devices. For example, security may be enhanced through measures such as obfuscation, anti-tamper techniques, and anti-debugging methods, alongside exploit mitigations like stack canaries and control-flow integrity. This binary rewriting involves applying sophisticated code transformations directly at the binary level. However, given the complexity and potential pitfalls of these transformations, robust large-scale, automated end-to-end testing is important.

The example validation framework of Fig. 3 was designed to be both flexible and comprehensive, supporting large-scale validation for binary code transformations. The primary goal was to ensure that the transformed binaries meet stringent correctness and safety requirements. The framework accommodates a diverse range of benchmarks, including embedded test suites, open-source software like Coreutils and Binutils, compilers, language interpreters, embedded firmware, and proprietary software.

The framework supports multiple architectures, such as x86-32, x86-64, ARMv6M, ARMv8M, and RISC-V, and is compatible with various operating systems, including bare-metal environments, Windows, and Linux. Additionally, it supports execution on native computers, virtualized environments (e.g., virtual machines and Docker containers), and embedded boards, handling a variety of execution scenarios like native execution, virtualized environment execution, emulation, simulation, and debugging.

The validation process involves several key stages:
1. **Collection and Preparation of Binaries**: A diverse set of binaries is gathered, encompassing various types of software and hardware platforms.
2. **Application of Security Transformations:** These binaries are subjected to security transformations, which include obfuscation, anti-tamper techniques, and other protective measures.
3. **Execution Across Diverse Environments:** The transformed binaries are executed in different environments to test their behavior.
4. **Output Comparison and Validation:** The outputs from the original and transformed binaries are compared to validate the transformations' correctness and integrity, ensuring that the modifications do not introduce errors or vulnerabilities.

Fig. 3 shows the following components of the framework:
- **Orchestrator 21** (also referred to as Nyxrunner): serving as the central component, the orchestrator 21 orchestrates the entire testing process, coordinating with all other components to ensure smooth operation and comprehensive testing.
- **Database 22:** Non-volatile database used by Orchestrator 21; stores input binaries, transformation profiles, platform information, execution information, and validation strategy, for example.
- **ToolChain Server 23:** This server accesses various compilers to build binaries from source code, enabling support of a diverse range of benchmarks.
- **Binary Analysis Server 24:** This component analyzes binaries, providing important data for the binary rewriting tool to apply appropriate transformations.
- **Binary Rewriter Server 25** (also referred to as Nyx Server): dedicated to running the binary rewriting tool (also referred to as Nyx), this server handles the transformation processes. The binary rewriting tool applies the necessary security transformations to the binaries.
- **Binary Runner Server 26:** This server dispatches binaries to different execution environments, ensuring they are tested under various conditions. It collects and returns the results for analysis.
- **Embedded Board Runner 27:** this server provides debugging and execution environments specifically for bare-metal embedded boards, important for testing firmware.
- **Other runners 28 and 29:** runner 28 may operate on a native computer, for example. Runner 29 may operate on a virtualized environment, for example. Only three runners are shown in Fig. 3, but typically more than three runners are used.
- **Bare-metal embedded boards 31-32:** important for testing firmware. Only two bare-metal embedded boards are shown in Fig. 3, but typically more than two bare-metal embedded boards are used.

Most of the components of the framework may operate as a microservice within a Docker container, allowing for modular development, deployment, and maintenance. This containerized approach also enables easy scaling of individual components to handle increased loads or specific testing scenarios.

Components may communicate with each other through a REST API, which standardizes interactions and facilitates integration. This API-driven communication ensures that each microservice can operate independently, only interacting with others as necessary to complete tasks. This enhances the modularity of the system, making it easier to update or replace components without disrupting the overall functionality.

To optimize performance, each component may utilize an asynchronous in-memory job database. Tasks may be organized into queues and distributed across multiple threads and, depending on the component, across virtualized environments. A load balancer manages the distribution of tasks, ensuring efficient resource utilization and minimizing processing time. This setup allows the framework to handle large-scale testing efficiently, even when dealing with a high volume of binaries and complex transformations.

Security is an important aspect of the framework. All inter-component communication may be secured using Public Key Infrastructure (PKI). Components may authenticate themselves using certificates, establishing a trusted environment for data exchange. Communication may be encrypted via Transport Layer Security (TLS), ensuring that data is protected from unauthorized access or tampering during transmission.

The framework of Fig. 3 is a comprehensive end-to-end validation framework designed to ensure the integrity and correctness of binary transformations. Its primary goal is to validate that transformations applied by the binary rewriting tool do not introduce errors or vulnerabilities into the binaries. The framework achieves this by building and testing a diverse set of binaries using various compilers, optimization levels, and platform configurations.

To provide a robust testing environment, the framework includes a wide range of input programs and benchmarks, encompassing both source-built and pre-compiled binaries. These benchmarks cover different architectures and operating systems, ensuring that the validation process accounts for a broad spectrum of real-world scenarios. This diversity is important for thoroughly testing the transformed binaries under various conditions.

The framework operates in several stages, each storing intermediate data in database 22. This data retention facilitates faster subsequent executions and allows for manual inspection of transformed binaries and other outputs for debugging purposes. The framework's stages include:
1. **Database Generation:** In this initial phase, a large database of diverse software benchmarks is compiled in database 22. These benchmarks are built from source or included as pre-compiled binaries, covering various architectures, compilers, and compiler options.
2. **Transformation:** During this stage, the orchestrator 21 sends binaries to the Binary Analysis Server 24 for detailed analysis. Based on the analysis and based on transformation profiles, the binary rewriting tool running on the Binary Rewriting Server 25 applies security and functional transformations to the binaries, which are then stored in the database 22 along with comprehensive metadata.
3. **Execution and Validation:** In the final stage, both original and transformed binaries are executed. Their outputs are compared according to specified validation strategies, such as return code analysis, stdout comparison, system behavior, and debug behavior. This comparison ensures that the transformations have not compromised the binaries' intended functionality or security.

Overall, the framework provides a scalable, automated solution for validating binary transformations, supporting extensive testing across various platforms and configurations.

### Database Generation stage

The orchestrator 21 initiates its validation process by constructing a comprehensive database of diverse and complex software benchmarks. This database is essential for thorough testing and validation of the transformations applied to binaries. The benchmarks are divided into several categories:
1. **Source-Built Benchmarks:** These include embedded device benchmarks like MiBench2 and Coremark, which are compiled from source code. To maximize coverage, these benchmarks are built for various architectures using different compilers and optimization levels. Detailed build and linking information is documented in a JSON file. The orchestrator 21 provides source code and build information to the ToolChain Server 23, which builds the binaries following the provided instructions.
2. **Pre-Compiled Benchmarks:** Due to the complexity of their build systems or lengthy compilation times, some benchmarks are included in a pre-compiled form. These are compiled for various architectures and, where feasible, multiple operating systems, utilizing different compilers and optimization settings. Examples include Coreutils, Binutils, language interpreters, and compilers.
3. **Closed-Source/Proprietary Binaries:** This category comprises binaries that are not accompanied by source code, often including customer-specific setups or proprietary software. Since these binaries cannot be rebuilt with different settings, they are used as-is.

Each database entry may include the following information:
- **Input Binary:** The original executable file.
- **Transformation Profile:** Details which transformations are applicable, based on platform or binary-specific constraints.
- **Platform Information:** Describes the target architecture, exact board type, and/or operating system (if existing; otherwise 'BareMetal', for example).
- **Execution Information:** Specifies how and where the binary should be executed, including options like physical devices, Docker containers, emulation, simulation, or debugging.
- **Validation Strategy:** Outlines methods for assessing the transformed binary's behavior, including analysis of return codes, output comparisons, system behavior, or other relevant metrics.

The database 22 enables the framework to perform extensive and systematic validation, ensuring that the transformations applied by the binary rewriting tool maintain the functionality and security of the binaries across various platforms and configurations.

Examples of platform and execution information are:

```
              {
       "id": "x86-32-windows",
       "architecture": "X86_32",
       "operating_system": "Windows",
       "runners": [
         { "execution": { "endpoint": "binary-runner" } }
       ]
    },
    {
       "id": "STM32F407VGT6",
       "architecture": "ARMv7M",
       "operating_system": "BareMetal",
       "device": "STM32F407VGT6",
       "runners": [
         { "execution": { "endpoint": "embedded-server" } },
         { "debugger": { "endpoint": "embedded-server" } }
       ]
    },
    {
       "id": "STM32F405RGT6",
       "architecture": "ARMv7M",
       "operating_system": "BareMetal",
       "device": "STM32F405RGT6",
       "runners": [
         {
           "emulation": {
              "endpoint": "binary-runner",
              "emulator": "qemu",
              "arguments": "-M netduinoplus2 -m 128K -nographic -semihosting -kernel
              $BINARY"
           }
         }
       ]
    } ‴
```

### Transformation stage

The goal of the transformation stage is to apply security and functional transformations to the input binaries. After the database 22 has been established, the orchestrator 21 initiates the transformation process for all database entries as follows:
1. Analysis: Each binary, along with its platform information, is sent to the Binary Analysis Server 24. This server performs a detailed analysis of the binary, leveraging its extensive hardware resources and caching capabilities to efficiently process and store results. The analysis output, which includes detailed characteristics of the binary such as instructions and datafields, is returned in a JSON file.
2. **Transformation Request:** The next step involves the orchestrator 21 sending a set of data to the Binary Rewriter Server 25. This data set includes the input binary, the transformation profile, platform information from the database, and the analysis results from the Binary Analysis Server 24. The transformation profile specifies the types of transformations to be applied, tailored to the binary's specific requirements and platform constraints.
3. **Transformation Application:** The Binary Rewriter Server 25 processes this data, applying the specified transformations to the binary. These transformations may include various security enhancements such as obfuscation, anti-tamper techniques, and exploit mitigations like stack canaries and control-flow integrity.
4. **Storage and Documentation:** Once the transformations are completed, the Binary Rewriter Server 25 returns the transformed binary to orchestrator 21. The orchestrator 21 then stores the transformed binaries in the database 22 along with all related information, including the original platform details, the transformation profile, and execution and validation strategies. This comprehensive storage ensures that each transformed binary is properly documented and ready for the subsequent validation phase.

### ToolChain Server 23

The ToolChain Server 23 is an important component of the framework, responsible for building binaries from source code. It plays a key role in ensuring that a diverse range of binaries are available for testing and validation.
1. **Receiving Build Requests:** The ToolChain Server 23 receives source code and associated build information from the orchestrator 21. This information includes specific details about the compilation process, such as target architecture, compiler settings, and optimization levels.
2. **Dispatching to Virtualized environments:** The server then dispatches the source code and build information to a network of virtualized environments, e.g., virtual machines. Each virtualized environment is configured with a specific build environment, which can include various operating systems like Windows and Linux, and different compilers such as GCC, Clang, and specialized embedded build systems.
3. **Building Binaries:** Within each virtualized environment, a client application receives the source code and build instructions. The client then compiles the binaries according to the provided specifications. This setup allows for building binaries with a wide array of configurations, simulating different real-world scenarios.
4. **Returning and Cleaning:** After the binaries are built, the client sends them back to the ToolChain Server 23. The virtualized environment then cleans up the build environment, removing any temporary files or data to maintain a consistent state for subsequent builds.
5. **Sending Binaries to the Orchestrator 21:** Finally, the ToolChain Server 23 forwards the compiled binaries back to the orchestrator 21, where they are integrated into the testing and validation pipeline.

The infrastructure of the ToolChain Server 23, featuring various virtualized environments with distinct operating systems and compilers, ensures that the framework can build and test binaries under a wide range of conditions, supporting comprehensive validation across multiple platforms and environments.

### Binary Analysis Server 24

The primary goal of the Binary Analysis Server 24 is to perform a comprehensive analysis of a given binary, extracting important information that aids in the transformation and validation stages. It performs the following steps:
1. **Receiving Input:** The server receives binaries along with platform information from the orchestrator 21. This data specifies the context in which the binary operates, such as the target architecture and operating system, which may influence the analysis.
2. **Analysis Process:** Upon receiving a binary, the Binary Analysis Server 24 queries a binary analysis engine to conduct the analysis. It supports multiple analysis tools, including:
   a. Ghidra: An open-source framework for reverse engineering.
   b. IDA Pro: A commercial decompiler and debugger.
   c. Binary Ninja: A commercial binary analysis tool.
   d. In-House Solutions: Proprietary tools developed specifically for internal use.
3. **Extracted Information:** The analysis yields various data points, including:
   a. Function Names and Addresses: Identifying different functions within the binary and their memory locations.
   b. Function Call Trees: Mapping the calling relationships between functions.
   c. Instructions: Detailing the individual machine instructions contained in the binary.
   d. Data Fields: Extracting structured data such as global variables and jump tables.
4. **Output Format:** The analysis results are compiled into a JSON file, which provides a structured format that is easily consumable by other components of the framework, particularly the binary rewriting tool for applying transformations.

To optimize performance and resource utilization, the Binary Analysis Server 24 caches the results of previous analyses. If a binary is submitted for analysis with the same configuration as before, the server retrieves and returns the cached results. To manage memory resources efficiently, especially given the potentially large size of analysis data, the server stores these results in a compressed and serialized format.

### Binary rewriter server 25

The binary rewriting tool has been designed to enhance the security of software by applying various code transformations. It operates by taking in two primary inputs: a binary file, typically provided by customers, and a configuration file that details the specific protection goals and transformations to be applied. These transformations are aimed at safeguarding intellectual property (IP) and enhancing security through measures such as code obfuscation, anti-debugging, and anti-tampering techniques. Additionally, the binary rewriting tools implements exploit mitigations, including stack canaries and control-flow integrity, to protect against potential vulnerabilities. Upon receiving the inputs, the binary rewriting tools conducts an in-depth analysis of the binary, applying the specified security features. The output of this process is a hardened binary.

To ensure that the transformations applied by the binary rewriting tool do not introduce errors or break the functionality of the binary, a rigorous validation process to confirm the integrity and correctness of the transformed binaries is necessary. This is addressed by the large-scale, automated end-to-end testing framework of Fig. 3.

The primary role of the Binary Rewriter Server 25 is to apply code transformations to software binaries, enhancing their security and functionality. This process involves several key steps, utilizing a distributed architecture with virtualized environments for efficient execution:
1. **Input Reception:** The Binary Rewriter Server 25 receives the input binary, transformation profile, platform information, and analysis results from the orchestrator 21. These inputs provide the necessary details for the transformation process.
2. **Dispatch to Virtualized environments:** The Binary Rewriter Server 25 distributes this information to a virtualized environment, which performs the transformation.
3. **Transformation Process:**
   a. Within the virtualized environment, a client application processes the inputs.
   b. The binary rewriting tool is used to apply transformations according to the transformation profile in step 121 of Fig. 2, ensuring that the specific security enhancements are implemented correctly.
4. **Output Handling:**
   a. After transformations are applied, the transformed binary, along with relevant metadata, is returned to the orchestrator 21 for further validation and integration into the broader testing framework.
   b. The virtualized environment then undergoes a cleanup process to prepare for the next task, ensuring no residual data affects subsequent operations.

### Execution and Validation stage

The goal of the execution and validation stage is to execute both the original and transformed binaries, capture their outputs, and validate the correctness and integrity of the transformations. In this final stage of the process, the following steps are performed:
1. **Data Retrieval:** The orchestrator 21 retrieves the necessary data from the database 22, including the original binary, platform information, execution details, and validation strategy in step 127 of Fig. 2. The orchestrator 21 obtains the transformed binary from the binary rewriter server 25 in step 129 of Fig. 2. This data is then sent to the Binary Runner Server 26 in steps 131 and 133 of Fig. 2.
2. **Execution:** The Binary Runner Server 26 uses the provided execution information and validation strategy to run the binaries. It executes both the original and transformed binaries across various environments, as specified by the platform information. The server collects the execution results, which may include outputs, logs, system behavior, and other relevant data.
3. **Validation:** The results from the executions of the original and transformed binaries are compared according to the specified validation strategy. If the results are consistent between the two versions, the validation is deemed successful, indicating that the transformations have not altered the binary's intended functionality or behavior. If there are discrepancies, the validation fails, suggesting potential errors in the transformation process or issues during execution.

Several validation strategies are employed to ensure comprehensive evaluation:
- **Return Code Analysis:** This strategy checks the return codes of the executions, identifying whether any errors or crashes occurred, and confirming successful computation.
- **Stdout Comparison:** This involves comparing the outputs printed to the standard output (stdout) by both binaries to ensure they match, verifying that the computational results are identical.
- **System Behavior:** This strategy assesses whether both binaries perform similarly within the system, such as creating the same files or modifying system states in a comparable manner.
- **Debug Behavior:** This involves validating specific internal states, such as register or memory values, at particular points during execution (e.g., after setting a breakpoint), ensuring that the binaries exhibit the same behavior under scrutiny.

Through these strategies, the framework ensures that the transformations do not introduce unintended changes, maintaining the functional and security integrity of the binaries.

### Binary Runner Server 26

The Binary Runner Server 26 is responsible for executing binaries in their designated environments and capturing execution results. It performs the following steps:
1. **Input Reception:** The Binary Runner Server 26 receives a binary, along with detailed execution information and a validation strategy. This data specifies how and where the binary should be executed and outlines the criteria for evaluating the results.
2. **Dispatch to Runners:** Based on the execution information, the Binary Runner Server 26 dispatches the binary to an appropriate runner. The type of runner is selected to best match the intended execution environment, which may include:
   a. Native Computers or Virtualized Environments, e.g., virtual machines: For testing binaries in a traditional computing environment.
   b. Emulators: For simulating different hardware architectures.
   c. Simulators: For replicating specific hardware or system conditions.
   d. Debuggers: Native Computers or Virtualized Environments but with debugger. For detailed inspection and troubleshooting of binary behavior.
   e. Embedded Boards: For real-world testing on actual hardware, with binaries sent to the Embedded Board Server 27 for execution.
3. **Execution and Validation:** The runner executes the binary according to the provided execution information and validation strategy.
4. **Result Reporting:** After execution, the runner collects the execution output and processes it according to the validation strategy. The validation strategy dictates how the results are measured, which may include checking return codes, comparing output logs, assessing system behavior, or other metrics relevant to the binary's function. The processed results are then returned to the Binary Runner Server.
5. **Return to Orchestrator 21:** Finally, the Binary Runner Server 26 sends the results back to orchestrator 21, where they are used for further analysis and validation of the binary transformations.

Binaries may be executed in various scenarios to validate their functionality under different conditions. These running modes include:
1. **Native Execution:** This mode involves running the binary directly on native hardware, such as a physical computer, a virtualized environment utilizing hardware-based virtualization, or an embedded board. Native execution provides the most accurate representation of the binary's behavior in a real-world environment, as it runs on the actual hardware for which it was designed.
2. **Emulation:** In this mode, the binary is run within an emulator that mimics a different architecture or an entire embedded board. This is useful for testing how a binary would behave on hardware that is not physically available. An example is using QEMU to emulate different CPU architectures. However, emulation may not perfectly replicate the internal state and behavior of the hardware.
3. **Simulation:** Simulation involves cycle-accurately modeling the internal hardware state, providing detailed insights into the binary's interactions with hardware components. This mode is often used for simpler architectures, such as RV32I, where tools like Verilator can simulate hardware behavior with high accuracy. Simulation is particularly useful for verifying hardware-software interactions but is computationally intensive and typically slower.
4. **Debugging:** This mode involves running the binary directly on native hardware but under a debugger, allowing for detailed inspection and manipulation of the program's execution. Debuggers like GDB, LLDB, WinDBG, and embedded debugging environments enable setting breakpoints, examining and modifying register and memory values, and executing debugger scripts.

### Runners 27-29

A runner is typically a microservice designed to manage the execution of binaries in specific environments. Each runner is responsible for the following tasks:
1. **Input Handling:** The runner takes a binary, along with execution information and a validation strategy, as input. This data guides the execution process and defines the criteria for evaluating the results.
2. **Execution:** The runner executes the binary in the designated environment as specified by the execution information. This environment could range from native hardware to virtualized or emulated setups, depending on the test requirements.
3. **Output Retrieval:** After execution, the runner fetches the output based on the validation strategy. This may involve capturing return codes, output logs, system behavior, or other relevant data to assess the binary's performance and correctness.
4. **Result Reporting:** The runner sends the collected results back to the Binary Runner Server 26, which integrates these findings into the broader testing and validation process.
5. **Environment Reset:** Following the execution and data collection, the runner resets the execution environment to its initial state, ensuring a clean setup for subsequent tasks.

Runners can function either as clients within a specific execution environment or as dispatchers managing multiple clients with similar configurations:
- **Client Runners:** These are set up in specific environments, such as a virtualized environment tailored for a particular architecture and operating system, or an embedded board. They handle direct execution of binaries.
- **Dispatcher Runners:** These manage a group of client runners, coordinating execution across multiple instances that share the same setup. This allows for efficient handling of large-scale testing scenarios.

The following are examples of runners:
1. **x86-64 Linux/Windows:** These runners operate on native computers or virtualized environments equipped with x86-64 processors, running Linux or Windows. They support native execution and debugging of binaries.
2. **x86-32 Linux/Windows:** Similar to the x86-64 runners but tailored for x86-32 architectures, these runners handle binaries in both Linux and Windows environments.
3. **AARCH64 Linux:** These runners are designed for AARCH64-based architectures, running Linux. They enable native execution and debugging.
4. **ARM QEMU:** Operating on native computers or virtualized environments with x86-64 architecture, these runners may use the QEMU emulator to run binaries for various ARM boards.
5. **RV32I Simulator:** These runners simulate the RV32I architecture, e.g., using the Verilator simulator, providing cycle-accurate modeling on x86-64 machines running Linux.
6. **ARMv6M Dispatcher:** This runner on Embedded Board Server 27 dispatches execution tasks to various ARMv6M-based boards, facilitating testing and debugging.
7. **ARMv7M Dispatcher:** Similar to the ARMv6M dispatcher but focused on ARMv7M-based boards, managing the execution and debugging processes from Embedded Board Server 27.

### Embedded Board Server 27

The Embedded Board Server 27 provides critical remote-access capabilities for executing and debugging binaries on bare-metal embedded development boards. It supports various workflows depending on the requirements for debugger attachment and validation strategies. The primary goal of the Embedded Board Server 27 is to facilitate remote execution and debugging on embedded boards, enabling comprehensive testing of binaries in environments that closely mimic real-world conditions. The Embedded Board Server 27 performs the following steps:
1. **Input Handling:** The Embedded Board Server 27 receives a binary from the Binary Runner Server 26 in step 105 of Fig. 2 and platform information, execution information, and a validation strategy for the specific embedded board in step 103 of Fig. 2. This information specifies how the binary should be run and what metrics should be used to validate the results. More detailed information comprising the custom logic for the specific embedded board is obtained in step 103 of Fig. 2 based on the board type specified in the information received from the Binary Runner Server 26. This more detailed information may include unique identifier (as string, e.g. "STM32L0-board1"), architecture, exact board type, pin responsible for power cycling, list of ports/addresses where the debugger for the individual board listens, and/or list of usb device paths of the connected boards. This information is typically stored or computed on the Embedded Board Server 27.
2. **Dispatch to Runners:** A dispatcher runner on the Embedded Board Server 27 dispatches the binary and associated execution information and a validation strategy to client runners. These dedicated runners are specialized microservices that handle the execution on specific embedded boards according to the given execution strategy. These microservices may run on the Embedded Board Server 27.
3. **Execution and Output Collection:** Runners execute the binaries on the embedded boards in step 107 of Fig. 2, following one of two workflows depending on whether a debugger is attached:
   a. Use Case: Run with Attached Debugger:
      i. The binary is flashed onto the embedded board.
      ii. The board runs the binary with a debugger attached.
      iii. Output is collected as per the validation strategy, leveraging the debugger's capabilities for detailed insights.
      iv. The collected output is returned to the Embedded Board Server 27 in step 135 of Fig. 2.
      v. The board is reset to prepare for the next task.
   b. Use Case: Run with Detached Debugger:
      i. The binary is initially flashed onto the embedded board with the help of an attached debugger.
      ii. After flashing, the debugger is detached, and the board is power-cycled to clear any residual information from the debug core.
      iii. The binary is executed without the debugger attached, which is crucial for testing how the binary performs in a production-like environment.
      iv. Output from the binary is captured via a serial interface.
      v. The output is then sent back to the Embedded Board Server 27 in step 135 of Fig. 2.
      vi. The embedded board is reset to its initial state.
4. **Result Reporting:** After receiving the output from the runners in step 135 of Fig. 2, the Embedded Board Server 27 processes the results and sends them to the orchestrator 21 in step 137 of Fig. 2, where they are used for further analysis and validation of the binary transformations in step 141 of Fig. 2.

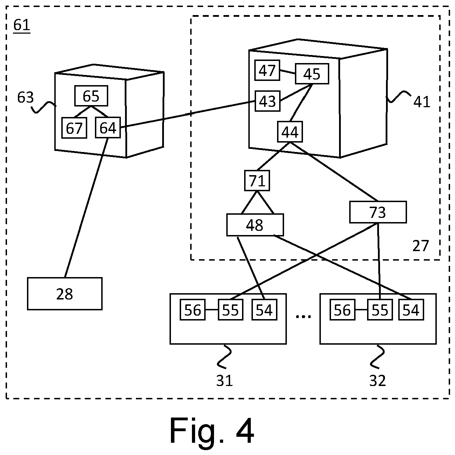

Fig. 4 shows an implementation of the system for controlling embedded boards to execute transformed binaries. In this implementation, a system 61 comprises an Embedded Board Server 27, a further server 63, bare-metal embedded boards 31-32, and a native computer 28. The further server 63 is a server computer. The Embedded Board Server 27 comprises a server computer 41, USB-to-UART adapters 73, a power management board 48 and a single-board computer 71, e.g., a Raspberry Pi, between the server computer 41 and the power management board 48. The server computer 41 may be, for example, a standard server computer, i.e., without any special hardware.

In an alternative implementation, another type of computer is used instead of a single-board computer. In another implementation, the power management board 48 and the single-board computer 71 are integrated into a single device. In another implementation, the server computer 41, the power management board 48, and the single-board computer 71 are integrated into a single device.

The server computer 41 comprises a transceiver component 43, USB ports 44, a processor 45, and storage means 47. The further server 63 comprises a transceiver component 64, a processor 65, and storage means 67. The transceiver components 43 and 64 may each comprise a Wi-Fi transceiver and/or an Ethernet transceiver, for example. The embedded boards 31-32 each comprise power-related circuitry 54, an UART interface 55, and a debugger 56.

The Embedded Board Server 27 is typically a dedicated system designed to facilitate the execution and debugging of binaries on embedded development boards. For example, the Embedded Board Server 27 may operate on a dedicated computer running Linux, providing a stable and secure environment for managing multiple embedded boards.

The Embedded Board Server 27 connects to the various embedded development boards 31-32 via USB connections (and USB ports 44) on the server side and UART interfaces 55 on the board side via USB-to-UART adapters 73. Each embedded board is connected to one of the USB ports 44 via one of the USB-to-UART adapters 73. Thus, there is one USB cable connected to the server computer 41 for each embedded board in this implementation.

This enables the Embedded Board Server 27 to communicate with the boards, allowing for tasks such as flashing firmware, transferring data, and controlling execution. Upon startup, the Embedded Board Server 27 may perform automated bootup testing by engaging in a challenge-response protocol with each connected board. This protocol helps identify which specific board is associated with each USB device path, ensuring accurate mapping and control.

For example, upon startup of the server computer 41, tests may be performed that validate each connection. To this end, N (the number of USB cables the server sees) firmware images may be generated, each with a different random 4-byte response. Each binary may then be flashed individually to each board, and it may then be observed which port answers with the expected 4-byte response; this results in the mapping from board to cable.

The processor 45 of the Embedded Board Server 27 is configured to obtain custom logic for each respective board of the bare-metal embedded boards 31-32. The custom logic depends on a board type of the respective board. The processor 45 is further configured to obtain a transformed binary for each respective board of the bare-metal embedded boards 31-32, and control, via the USB ports 44, each respective board of the bare-metal embedded boards 31-32 to execute the transformed binary obtained for the respective board according to the custom logic obtained for the respective board. In Fig. 4, only two bare-metal embedded boards are shown, but (many) more than two bare-metal embedded boards may be used.

In the implementation of Fig. 4, the Embedded Board Server 27 comprises a custom power management board 48. This setup allows for individual power cycling of each board, which can be used for resetting boards and clearing any residual states between tests. Specifically, the custom logic obtained for an embedded board of the plurality of bare-metal embedded boards may indicate a pin responsible for power cycling on the embedded board and the processor 45 may be configured to control the embedded board according to the custom logic by clearing any residual states from the embedded board via the pin responsible for power cycling before the embedded board executes the transformed binary.

The power management board 48 may comprise multiple programmable diodes capable of automatically switching components of the embedded board on or off, thereby effectively connecting or disconnecting power, and the processor 45 may be configured to cause the power management board 48 to clear any residual states from the embedded board via the pin responsible for power cycling.

The server computer 41 is connected via one of USB ports 44 to the single-board computer 71 by a USB cable. Multiple cables run from the single-board computer 71 to the power management board 48, each cable corresponding to an embedded board. The single-board computer 71 comprises multiple pins for connecting the multiple cables. Each cable connects to a different input pin of the power management board 48. Multiple other cables run from the power management board 48 to the embedded boards, each connecting to a different output pin of the power management board 48. Each output pin connects to a different embedded board.

Each embedded board typically has a pin for power cycling, e.g., for letting the power management board 48 supply power to the embedded board and cut power to the board to perform power cycling. If such a pin is not available, the power-cycle cable may be connected to a transistor-like circuitry that is put in between the power source of the embedded board and other components of the embedded board to which the power source is connected, e.g., the CPU.

The power management board 48 may comprise relay connections and an array of NPN transistors in addition to the diodes, one of each per embedded board. These transistors are off whenever no current is applied to its base. A small voltage and current changes the state of the transistor and allows current to flow from its collector to emitter. This allows the single-board computer 71 to drive relays on the power management board 48 that require 5V and dozens of mA to operate.

On the power management board 48, the input pin is connected to 5V and the output pin is connected to the transistor. So, when the transistor is off, no current can flow, and the relay stays in its normal off position. When single-board computer 71 activates a transistor, the current can flow to ground, and the relay switches its state. To protect the transistors from dangerous voltage spikes which occur when the relay turns off, flyback diodes are attached in parallel to allow the voltage to slowly decline.

The power management board 48 communicates via USB with the single-board computer 71. When the server computer 41 sends a power-cycle command for embedded development board 31 to the single-board computer 71, the single-board computer 71 selects, according to the custom logic, which cable (i.e., which pin) to raise power for, e.g., 500 milliseconds, to invoke a power cycling on the embedded development board 31.

In the implementation of Fig. 4, each of the embedded boards 31-32 is equipped with a dedicated hardware debug unit 56. The Embedded Board Server 27 interfaces with these units through USB connections (via USB ports 44), utilizing debug ports to manage the boards' internal debug cores. Specifically, the custom logic obtained for the embedded board may indicate an address and a port to which the debugger of the embedded board listens and the processor 45 may be configured to control the embedded board according to the custom logic by instructing the debugger 56 via the address and the port to execute the transformed binary.

The processor 45 may further be configured to instruct the debugger 56 to flash the transformed binary onto the embedded board before executing the transformed binary and/or grab output generated by the transformed binary during execution of the transformed binary.

In the implementation of Fig. 4, the orchestrator 21, the database 22, the toolchain server 23, the binary analysis server 24, the binary rewriter 25, the binary runner server 26, and the runners 28-29 of Fig. 3 are all implemented in a single device, i.e., computer 63. In an alternative embodiment, these components are distributed over multiple devices.

For effective debugging and execution management, the Embedded Board Server 27 may spawn a dedicated process for each embedded board. This may be managed using frameworks like OpenOCD, which provide access to the boards' debug cores and facilitates debugging tasks. To streamline debugging and execution workflows, the Embedded Board Server 27 may include an in-house Lisp interpreter to map commands and expressions to the corresponding debugger instructions, enabling automated and scriptable control over the boards.

The Embedded Cloud Server 27 described above may be used to manage and control multiple embedded development boards efficiently, providing a robust platform for testing and validating binaries in real-world hardware scenarios.

The processor 65 of the further server 61 may be configured to obtain a transformed binary for each virtualized environment and each native computer of a plurality of virtualized environments and native computers, including native computer 28, and control each respective virtualized environment and each respective native computer of the plurality of virtualized environments and native computers to execute the transformed binary obtained for the respective virtualized environment or the respective native computer.

In the implementation of the computers 27 and 63 shown in Fig. 4, the computers comprise one processor. In an alternative implementation, one or more of the computers 27 and 63 comprise multiple processors. Each processor may be a general-purpose processor, e.g. from Intel or AMD, or an application-specific processor. Each computer may run a Windows or Unix-based operating system for example. The storage means 47 and 67 may comprise one or more memory units. The storage means 47 and 67 may comprise one or more hard disks and/or solid-state memory, for example. The storage means 47 and 67 may be used to store an operating system, applications and application data, for example.

The transceivers 43 and 64 may use one or more wired and/or wireless communication technologies such as Ethernet and/or Wi-Fi (IEEE 802.11) to communicate with other devices, for example. In the implementations shown in Fig. 4, a receiver and a transmitter are combined into a transceiver. In an alternative implementation, a separate receiver and a separate transmitter may be used. In an alternative implementation, multiple receivers and/or multiple transmitters, e.g., multiple transceivers, are used instead of a single receiver and a single transmitter. The computers 27 and 63 may comprise other components typical for a computer such as a power connector. The invention may be implemented using a computer program running on one or more processors.

One or more of the implementations described above may be combined to create one or more additional implementations. For example, one or more steps of one flowchart may be added to another flowchart.

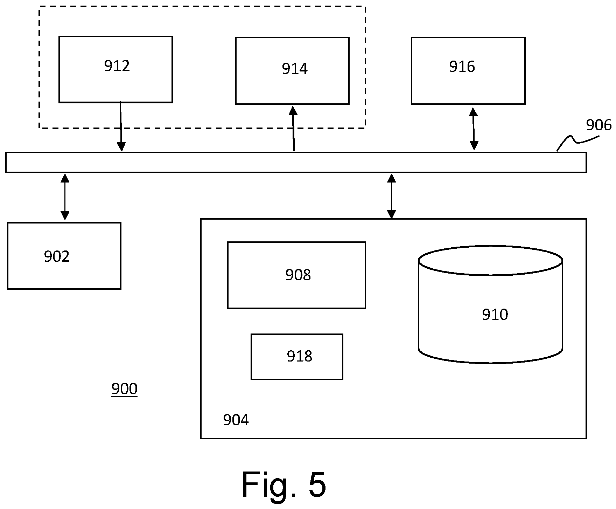

Fig. 5 depicts a block diagram illustrating an exemplary data processing system that may perform the method as described with reference to the flow charts.

As shown in Fig. 5, the data processing system 900 may include at least one processor 902 coupled to memory elements 904 through a system bus 906. As such, the data processing system may store program code within memory elements 904. Further, the processor 902 may execute the program code accessed from the memory elements 904 via a system bus 906. In one aspect, the data processing system may be implemented as a computer that is suitable for storing and/or executing program code.

It should be appreciated, however, that the system 900 may be implemented in the form of any system including a processor and a memory that is capable of performing the functions described within this specification. The data processing system may be an Internet/cloud server, for example.

The memory elements 904 may include one or more physical memory devices such as, for example, local memory 908 and one or more bulk storage devices 910. The local memory may refer to random access memory or other non-persistent memory device(s) generally used during actual execution of the program code. A bulk storage device may be implemented as a hard drive or other persistent data storage device. The processing system 900 may also include one or more cache memories (not shown) that provide temporary storage of at least some program code in order to reduce the quantity of times program code must be retrieved from the bulk storage device 910 during execution. The processing system 900 may also be able to use memory elements of another processing system, e.g. if the processing system 900 is part of a cloud-computing platform.

Input/output (I/O) devices depicted as an input device 912 and an output device 914 optionally can be coupled to the data processing system. Examples of input devices may include, but are not limited to, a keyboard, a pointing device such as a mouse, a microphone (e.g. for voice and/or speech recognition), or the like. Examples of output devices may include, but are not limited to, a monitor or a display, speakers, or the like. Input and/or output devices may be coupled to the data processing system either directly or through intervening I/O controllers.

The input and the output devices may be implemented as a combined input/output device (illustrated in Fig. 5 with a dashed line surrounding the input device 912 and the output device 914). An example of such a combined device is a touch sensitive display, also sometimes referred to as a "touch screen display" or simply "touch screen". In such an implementation, input to the device may be provided by a movement of a physical object, such as e.g. a stylus or a finger of a user, on or near the touch screen display.

A network adapter 916 may also be coupled to the data processing system to enable it to become coupled to other systems, computer systems, remote network devices, and/or remote storage devices through intervening private or public networks. The network adapter may comprise a data receiver for receiving data that is transmitted by the systems, devices and/or networks to the data processing system 900, and a data transmitter for transmitting data from the data processing system 900 to the systems, devices and/or networks. Modems, cable modems, and Ethernet cards are examples of different types of network adapter that may be used with the data processing system 900.

As pictured in Fig. 5, the memory elements 904 may store an application 918. The application 918 may be stored in the local memory 908, the one or more bulk storage devices 910, or separate from the local memory and the bulk storage devices. It should be appreciated that the data processing system 900 may further execute an operating system (not shown in Fig. 5) that can facilitate execution of the application 918. The application 918, being implemented in the form of executable program code, can be executed by the data processing system 900, e.g., by the processor 902. Responsive to executing the application, the data processing system 900 may be configured to perform one or more operations or method steps described herein.

The invention may be implemented as a program product for use with a computer system, where the program(s) of the program product define functions. The program(s) may be contained on a variety of non-transitory computer-readable storage media, where, as used herein, the expression "non-transitory computer readable storage media" comprises all computer-readable media, with the sole exception being a transitory, propagating signal. The program(s) may also be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 902 described herein.

The terminology used herein is for the purpose of describing particular implementations only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The detailed description has been presented for purposes of illustration, but is not intended to be exhaustive or limited to the implementations in the form disclosed. Many modifications and variations will be apparent to those of ordinary skill in the art without departing from the scope of the present invention.

## Claims

1. A system (27,61) for controlling embedded boards to execute binaries, the system (27,61) comprising:
at least one control interface (44); and
at least one processor (45,65) configured to:
- obtain custom logic for each respective board of a plurality of bare-metal embedded boards (31-32), the custom logic depending on a board type of the respective board,
- obtain a binary for each respective board of the plurality of bare-metal embedded boards (31-32), and
- control, via the at least one control interface (44), each respective board of the plurality of bare-metal embedded boards (31-32) to execute the binary obtained for the respective board according to the custom logic obtained for the respective board.

2. A system (61) as claimed in claim 1, wherein the binaries to be executed by the plurality of bare-metal embedded boards (31-32) have been created by applying one or more transformations and the at least one processor (45,65) is configured to:
- collect, from each respective board, output generated by the binary during execution on the respective board, and
- determine whether the one or more transformations are correct based on the collected output.

3. A system (61) as claimed in claim 2, wherein the at least one processor (65) is configured to:
- compare the collected output with expected output, and
- determine that the one or more transformations are correct if the collected output matches the expected output.

4. A system (61) as claimed in claim 2 or 3, wherein the at least one processor (65) is configured to create the binaries to be executed by the plurality of bare-metal embedded boards (31-32) by applying the one or more transformations to each of multiple input binaries.

5. A system (27,61) as claimed in any one of the preceding claims, wherein the at least one processor (45) is configured to simultaneously control each respective board of the plurality of bare-metal embedded boards (31-32) to execute the binary obtained for the respective board according to the custom logic obtained for the respective board.

6. A system (27,61) as claimed in any one of the preceding claims, wherein the custom logic obtained for an embedded board of the plurality of bare-metal embedded boards (31-32) indicates a pin responsible for power cycling on the embedded board and the at least one processor (45) is configured to control the embedded board according to the custom logic by clearing any residual states from the embedded board via the pin responsible for power cycling before the embedded board executes the binary.

7. A system (27,61) as claimed in claim 6, further comprising a power management board (48), the power management board (48) comprising multiple programmable diodes capable of automatically switching components of the embedded board on or off, thereby effectively connecting or disconnecting power, and the at least one processor (45) is configured to cause the power management board (48) to clear any residual states from the embedded board via the pin responsible for power cycling.

8. A system (27,61) as claimed in any one of the preceding claims, wherein an embedded board of the plurality of bare-metal embedded boards (31-32) comprises a debugger (56), the custom logic obtained for the embedded board indicates an address and a port to which the debugger of the embedded board listens, and the at least one processor (45) is configured to control the embedded board according to the custom logic by instructing the debugger (56) via the address and the port to execute the binary.

9. A system (27,61) as claimed in claim 8, wherein the at least one processor (45) is configured to instruct the debugger (56) to flash the binary onto the embedded board before executing the binary and/or grab output generated by the binary during execution of the binary.

10. A system (27,61) as claimed in any one of the preceding claims, wherein the binaries to be executed by the plurality of bare-metal embedded boards (31-32) are transformed binaries.

11. A system (27,61) as claimed in any one of the preceding claims, wherein the at least one processor (45,65) is configured to select the plurality of bare-metal embedded boards (31-32) from a collection of bare-metal embedded boards, the collection of bare-metal embedded boards comprising bare-metal embedded boards having the same board type and the plurality of bare-metal embedded boards (31-32) not comprising bare-metal embedded boards having the same board type.

12. A system (61) as claimed in any of the preceding claims, wherein the at least one processor (65) is configured to:
- obtain a binary for each virtualized environment (29) and each native computer (28) of a plurality of virtualized environments and native computers, and
- control each respective virtualized environment (29) and each respective native computer (28) of the plurality of virtualized environments and native computers to execute the binary obtained for the respective virtualized environment (29) or the respective native computer (28).

13. A system (61) as claimed in any one of the preceding claims, further comprising the plurality of bare-metal embedded boards (31-32).

14. A method of controlling embedded boards to execute binaries, the method comprising:
- obtaining (103) custom logic for each respective board of a plurality of bare-metal embedded boards, the custom logic depending on a board type of the respective board,
- obtaining (105) a binary for each respective board of the plurality of bare-metal embedded boards, and
- controlling (107) each respective board of the plurality of bare-metal embedded boards to execute the binary obtained for the respective board according to the custom logic obtained for the respective board.

15. A computer program product for a computing device, the computer program product comprising computer program code to perform the method of claim 14 when the computer program product is run on a processing unit of the computing device.
